# EUROPEAN PATENT SPECIFICATION

(11) **EP 3 691 255 B1**
(45) Date of publication and mention of the grant of the patent: **07.08.2024**
(21) Application number: 18861851.6
(22) Date of filing: 30.09.2018
(51) Int. Cl.: H04N 7/18, H04N 21/431, H04N 21/43

(54) **METHOD FOR PLAYING MULTIPLE VIDEOS ON MOBILE TERMINAL, MOBILE TERMINAL, AND READABLE STORAGE MEDIUM**
VERFAHREN ZUM ABSPIELEN MEHRERER VIDEOS AUF EINEM MOBILEN ENDGERÄT, MOBILES ENDGERÄT UND LESBARES SPEICHERMEDIUM
PROCÉDÉ DE LECTURE DE VIDÉOS MULTIPLES SUR UN TERMINAL MOBILE, TERMINAL MOBILE, ET SUPPORT DE STOCKAGE LISIBLE PAR ORDINATEUR

(30) Priority: 30.09.2017 CN 201710913434
(43) Date of publication of application: 05.08.2020
(73) Proprietor: ZTE Corporation, Shenzhen, Guangdong 518057 (CN)
(72) Inventor: CHAN, Haopeng, Shenzhen, Guangdong 518057 (CN); ZHANG, Liang, Shenzhen, Guangdong 518057 (CN)
(74) Representative: Tiburzi, Andrea
(86) International application number: PCT/CN2018/109093
(87) International publication number: WO 2019/063013

(56) References cited:
- EP-A1- 3 200 470
- WO-A1-2014/137025
- WO-A1-2017/030615
- CN-A- 103 581 754
- CN-A- 103 957 447
- CN-A- 103 957 447
- CN-A- 104 159 086
- CN-A- 105 898 538
- CN-A- 106 454 186
- US-A1- 2012 198 507

## Description

### TECHNICAL FIELD

The present disclosure relates to the field of communications and, for example, to a method for playing multiple videos on a mobile terminal, a mobile terminal and a computer readable storage medium.

### BACKGROUND

With the rapid development of mobile Internet and mobile terminals, more and more people use mobile terminals to watch videos and pursue to watch multiple high definition (HD) videos at the same time. Since software for viewing multiple videos on a mobile terminal is highly complex, none of the mainstream video providers, such as Tencent Video, iQiyi, and Sohu Video, provides commercial multiple HD videos playing service on mobile clients. Further relevant technologies are also known from CN 103957447 B (JINAN CLOVER INFORMATION TECHNOLOGY CO LTD) 18 July 2017 (2017-07-18) which relates to multi-window floating playing system; and EP 3200470 A1 (LE HOLDINGS (BEIJING) CO LTD [CN] ET AL.) 2 August 2017 (2017-0802) which relates to playing method and device for android platform, and mobile terminal device.

### SUMMARY

The problem that multiple videos cannot be played on the mobile terminal is solved by a method for playing multiple videos on a mobile terminal according to claim 1, a device for playing multiple videos on a mobile terminal according to claim 6, a mobile terminal according to claim 7 and a computer readable storage medium according to claim 8. Further improvements and embodiments are provided in the dependent claims.

### BRIEF DESCRIPTION OF DRAWINGS

FIG. 1 is a flowchart of a method for playing multiple videos on a mobile terminal provided by an embodiment;
FIG. 2 is a flowchart of packaging a playing SDK provided by an embodiment;
FIG. 3 is a structure diagram of a multiple video playing architecture provided by an embodiment;
FIG. 4 is a structure diagram of a multi-window player management fragment provided by an embodiment;
FIG. 5 is a structure diagram of an interaction between a multi-window player management fragment and a video program interface provided by an embodiment;
FIG. 6 is a structure diagram of a device for playing multiple videos on a mobile terminal provided by an embodiment; and
FIG. 7 is a structural diagram of a mobile terminal provided by an embodiment.

### DETAILED DESCRIPTION

The present disclosure provides a method for playing multiple videos on a mobile terminal, a mobile terminal and a computer readable storage medium. According to the present disclosure, a multi-window player is docked with a packaged playing SDK and playing of the multi-window player is managed through a multi-window player management fragment, such that multiple videos are played on the mobile terminal and the user can view the multiple videos at any time and place through the mobile terminal, thereby greatly enriching the user experience. The present disclosure will be described below in conjunction with the drawings and embodiments. The embodiments described herein are intended to explain and not to limit the present disclosure.

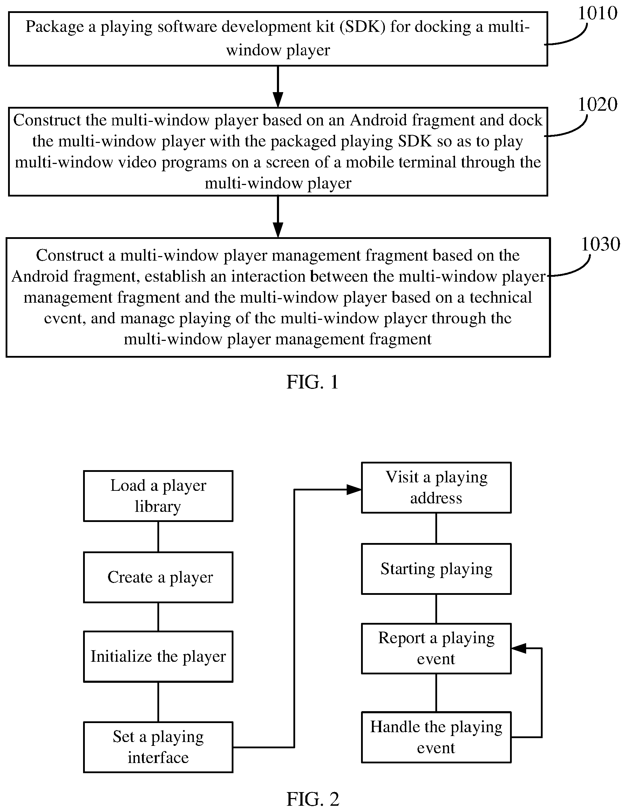

This embodiment provides a method for playing multiple videos on a mobile terminal. Referring to FIG. 1, the method provided by this embodiment includes the steps described below.

In step 1010, a playing software development kit (SDK) is packaged for docking a multi-window player.

In step 1020, the multi-window player is constructed based on an Android fragment, and the multi-window player is docked with the packaged playing SDK, such that multi-window video programs are played on a screen of a mobile terminal through the multi-window player.

In step 1030, a multi-window player management fragment is constructed based on the Android fragment, an interaction between the multi-window player management fragment and the multi-window player is established based on a technical event, and playing of the multi-window player is managed through the multi-window player management fragment.

According to the present disclosure, a multi-window player is docked with a packaged playing SDK and playing of the multi-window player is managed through a multi-window player management fragment, such that multiple videos are played on the mobile terminal and the user can view the multiple videos at any time and place through the mobile terminal, thereby greatly enriching the user experience..

In the present embodiment, the packaged SDK is connected with the existing player, constructs the multi-window player, and then the multi-window player is connected and connected with the packaged SDK, finally the playing of the multi-window player is managed through the multi-window player management fragment to implement the multi-window playing on the mobile terminal.

In an embodiment, the step in which the playing SDK is packaged for docking the player includes: loading a player library, creating a player, initializing the player, setting a playing interface, visiting a playing address, starting playing, reporting a playing event and processing the playing event.

In the present embodiment, the packaged playing SDK is connected with multiple types of players, so that the mobile terminal is able to play videos in multiple formats. The packaged SDK in this embodiment is used for meeting needs of multi-window playing of the user.

In an embodiment, through docking the players with the playing SDK and packaging the playing SDK, the present disclosure eliminates difference between various mainstream players, solves some problems of different players on different devices and satisfies adaptation to different devices of the multi-window playing. A playing function interface is packaged, functions such as player creation, player initialization, visiting a playing address, starting playing and playing event reporting are provided. In the packaging of the playing SDK, how to solve the problems in the one video playing and the problems in the multi-window playing are fully considered and a reasonable work division is achieved.

FIG. 2 is a flowchart of packaging the playing SDK provided by an embodiment. As shown in FIG. 2, in this embodiment, the packaging process of the playing SDK includes: completing the docking between the playing SDK and the player interface to implement a basic playing process, such as player creation, player initialization, playing link visiting and starting playing.

This embodiment provides a packaging process which is suitable to most players. The process includes the steps described below.

In step 2010, loading the player library is completed.

A static mode is adopted. Once the player class is loaded, the player library is loaded first.

In step 2020, the player creation is completed.

Different players have different creation processes. The playing SDK needs to perform different creation manners for docking.

In step 2030, the player initialization is completed.

The player initialization includes player engine registration and monitoring event registration.

In step 2040, configuring the playing interface is completed.

After the player initialization is completed, video pictures need to be introduced to the playing interface once the player starts playing. Configuring the playing interface includes processes such as interface creation, interface registration and interface callback monitoring.

In step 2050, playing address visiting is completed.

After the player is ready, it needs to visit the playing address and cause the player in a ready-to-play state. There are different ways to visit the playing address, different ways correspond to different parameters, and packaging is performed according to the parameters.

In step 2060, the starting playing of the videos is completed.

When the player is in the ready-to-play state, the corresponding playing can be performed by calling the starting playing, and the starting playing is to output content decoded by the player to the playing interface for viewing.

In step 2070, the player event reporting is completed.

In step 2080, the player event is processed.

When the playing starts, playing event reporting is monitored and corresponding processing is performed on different events.

In the claimed embodiment, constructing the multi-window player based on the Android fragment includes: constructing an interface layer, a control layer and a base dock layer of the multi-window player based on the Android fragment; docking the playing SDK through the base dock layer, calling the playing SDK to complete loading of the player, performing multi-window mute and performing monitoring and capturing on the playing event; controlling multi-window playing through the control layer, binding a multi-window control through the interface layer, and performing gravity sensing on multi-window screen rotation and detection on a multi-window screen slide gesture.

In the present disclosure, through rationally layering and rationally allocating functions of each layer, the playing of the mobile terminal is smooth and the operation is sensitive when multiple windows are played simultaneously.

In an embodiment, the control includes multi-window click event capturing, converting a multi-window monitoring event to a multi-window message, multi-window playing event reporting, and switching between a full-screen window and smaller windows during the multi-window playing.

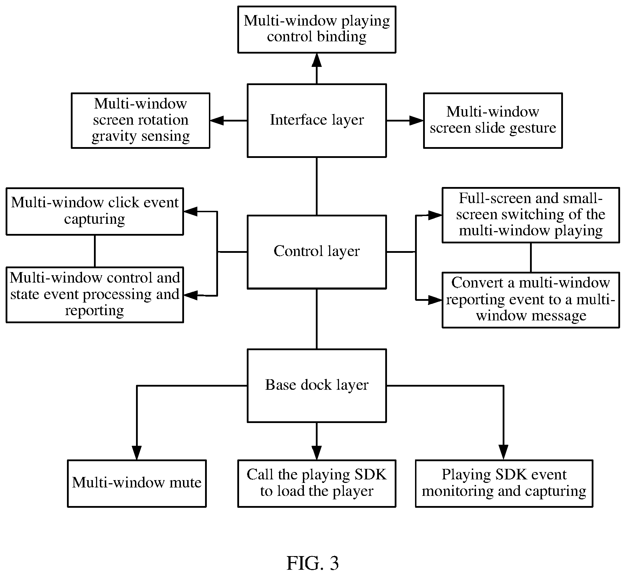

The present disclosure forms a complete multi-window player through loading the playing SDK, and through configuring the base dock layer, the control layer, and the interface layer, as shown in FIG. 3.

The base dock layer is used for docking the playing SDK, calling the playing SDK to complete the loading of the player, providing a multi-window mute function, and performing the playing event monitoring and capturing. For example:
calling the playing SDK to load the player, providing playing ability of universal players, and supporting the playing ability in multi-window playing.

The multi-window mute function means that in the multi-window playing, only the video the user wants to watch has sound and other videos have no sound. This function implements a function of turning on the video sound and turning off the video sound in the multi-window playing.

The playing SDK event monitoring and capturing means that the playing encounters a variety of cases in the playing process and the corresponding event is reported. This function completes the processing of corresponding event in the playing SDK.

The control layer: the multi-window control layer completes the corresponding control in the multi-window playing, which includes the multi-window click event capturing, the converting the multi-window monitoring event to the multi-window message, the multi-window playing event reporting, and switching between a full-screen window and smaller windows during the multi-window playing. For example:
the multi-window click event capturing: in the multi-window playing, when clicking one window, the user needs to determine which window is selected, determine whether this window is a main playing window, whether there is sound, whether to perform switching between a full-screen window and smaller windows, a series of processes are completed.

Multi-window control event processing and reporting: in the multi-window playing, multi-window playing control and state event processing and reporting exists, including: processing such as back-end switching of the multi-window playing, identity of a container in which multiple windows are located, whether the multi-window playing is one window, whether in a mute state, and converting to the multi-window message to report to the multi-window player management fragment.

Converting a multi-window reporting event to the multi-window message: in the multi-window playing, each multi-window player reports the event to facilitate the upper multi-window player management fragment to achieve intercommunication between multiple multi-window players. This function converts the multi-window reporting event into the multi-window message to facilitate management of the multi-window player management fragment.

Switching between a full-screen window and smaller windows during the multi-window playing: in the multi-window playing, through the switching between a full-screen window and smaller windows, the user switches between multiple windows playing and single window full-screen playing. When multiple windows playing is switched to single window full-screen playing, views of other relative layouts are hided and their sounds are turned off, this window is configured to be full screen and play the sound. When the single window full-screen playing is switched to the multiple windows playing, this window is reduced to a multi-window state and configured to play the sound, and other multi-windows are displayed again.

The interface layer: the interface layer of the multi-window playing completes multi-window control binding, multi-window screen rotation gravity sensing and multi-window screen slide gesture detection. For example:
Multi-window playing control binding: multi-window playing interface control binding is divided into two states: a smaller windows state and a full-screen state. In the smaller windows state, since multiple windows are on the screen, each window has a small size, and fewer controls are bound to the multiple windows, and only a button for switching between a full-screen window and smaller windows and a playing progress bar are provided. The full screen is bound with more controls, including the button for switching between a full-screen window and smaller windows, the playing progress bar, the sound configuration bar, a playing pause button and a playing exit button.

Multi-window playing screen rotation gravity sensing mainly completes the switching between a horizontal screen and a vertical screen during the multi-window playing when the screen rotates. Only when a screen rotation angle is greater than 45 degrees, the screen rotation is performed. After the rotation is completed, it needs to acquire a size of a multi-window interface and to complete the multi-window interface refreshing.

Multi-window screen slide gesture detection: the multi-window screen slide gesture includes gesture control fast forward, fast backward, and screen sound magnitude. Here a problem that a gesture sliding position controls which one of the multiple windows is mainly solved, a solution is to determine according to the number of multiple windows and a position of the multi-window interface.

In an embodiment, managing playing of the multi-window player through the multi-window player management fragment includes: acquiring a size of the playing interface of the multi-window player through the multi-window player management fragment, multi-window player selecting and refreshing, multi-window player management data structure setting, multi-window player position arrangement refreshing, multi-window player sound setting, information synchronization and communication between multi-window players, switching between a multi-window state of the multi-window player and a full-screen window state of the multi-window player, and screen direction changing of the multi-window player management interface.

The multi-window player management fragment of this embodiment is used for managing the playing of multiple windows, so that multiple windows can work at the same time, and the selected window may have the sound. Provided is a viewing mode of switching between the one-video-full-screen-window playing and the multiple videos simultaneous playing, and a communication function of multiple windows is completed.

Moreover, the present disclosure docks the multi-window player with the multi-window player management fragment, i.e., the multi-window player management fragment is not only a manager of the multi-window player, but also is a multi-video interface container, carries the multi-window player, implements operation and communication between the multi-window player management fragment and the multi-window player, includes functions such as loading, releasing, player interface refreshing and screen direction changing of the multi-window player.

In this embodiment, the multi-window player management fragment designed based on the Android Fragment technology may manage the multi-window playing, and include the following functions: information synchronization and communication between multiple players, management interface refreshing after loading, release and operation of multiple players, position arrangement problems of multiple playing windows, multiple player selection and sound control, window size acquisition of multiple window players and gravity sensing of multiple players.

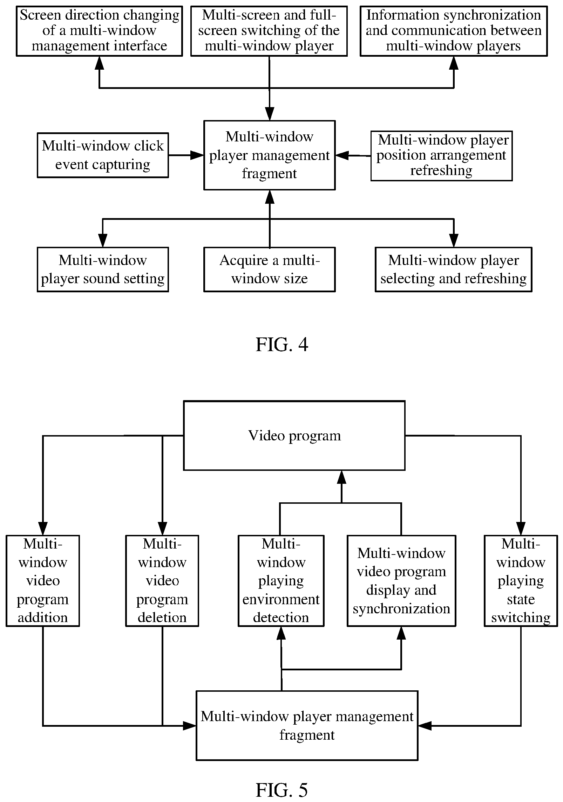

FIG. 4 is a diagram of functions implemented by a multi-window player management fragment provided by an embodiment. As shown in FIG. 4, the multi-window player management fragment is designed based on the Android fragment, and the function implementation of the multi-window player management fragment conforms to a life cycle of the Android fragment and provides corresponding interfaces. The functions of the multi-window player management fragment include window size acquisition, multi-window selecting and refreshing, a multi-window management data structure design, multi-window player position arrangement refreshing, multi-window sound setting, information synchronization and communication between multi-window players, switching between a full-screen window and smaller windows of the multi-window player, and screen direction changing of the multi-window player management interface. For example:
Window size acquisition: the window size is acquired through acquiring a multi-window container size, and performing corresponding screen division calculation. The window size is monitored by using a monitor view tree in a changing monitor class. When the screen rotates and switching between the full-screen window state and the multi-window state is performed, this monitoring can acquire a corresponding window width and height, i.e., the window size. These window size parameters provide support for the screen rotation and switching.

The multi-window management data structure design: multi-window management data structure is designed as a Java component, including contents such as the multi-window player, a container in which the multi-window player is located, whether the multi-window player is muted and a content address of multi-window player playing interface. Multiple multi-window players in the multi-window player management fragment forms a linked list.

Multi-window player position arrangement refresh: in the multi-window playing, one or more multi-window players work simultaneously. How to arrange these multi-window players is a core issue for the multi-window management. First, the multi-window player containers are formed into a link list. When adding or deleting the multi-window player, the Java component list of the multi-window players is compared with the container link list. Through comparing the container address, an unused container is selected from the container link list for carrying the multi-window player. During position refreshing, refreshing only needs to be performed according to the number of existing multi-window players, the container size and corresponding position are configured.

Multi-window player communication and information synchronization: the designed multi-window player list and multi-window management data structure are used. When a window player in the multi-window player sends a message, through traversing the multi-window player list, information is delivered to all multi-window players or the corresponding multi-window players to complete information synchronization. Scenarios such as full exiting of the multi-window playing, refreshing of multiple or all multi-window players, determining the number of multi-window players after performing some operations.

Multi-window selecting and refreshing: in the multi-window playing, when multiple windows are provided, the user will select a window as the main window for viewing. When the user clicks this multi-window, the multi-window player captures this click, and then reports container address information to the multi-window player management fragment. The multi-window player management fragment traverses the container list through the container address, configures borders of the corresponding window playing container to be red, configures this playing window to be volume on, refreshes other multi-window players, cancels red borders of other multi-window players, turns off sound of the window. The above process is multi-window selecting and refreshing function.

Multi-window sound setting: during the multi-window playing, multiple windows may be configured to have sound simultaneously, which may be completed through the sound setting of the multi-window player interface. After the interface configuration is completed, the event is reported to the multi-window player management fragment. In this case, the multi-window player management fragment needs to search a multi-window player list through the container address, and configures the sound item in the corresponding multi-window data structure to be in a mute or unmute state, i.e., updating multi-window player management fragment sound information.

Switching between a multi-window state and a full-screen window state of the multi-window player: during the multi-window playing, the user may switch the multi-screen state and the full-screen state through a button on the multi-window player interface. After the user clicks the button, the multi-window player completes a series of operations and reports the event to the multi-window player management fragment. The multi-window player management fragment calls a multi-window magnitude function to acquire the multi-window size, and configures the multi-window container list to display or hide the corresponding multi-window, and configures the window according to the window size parameters and completes the switching between the multi-window state and the full-screen window state.

Screen direction changing of the multi-window player management interface: the multi-window management interface is the carrying interface of all multi-windows. When the multi-window player starts to rotate, the event is reported to the multi-window management interface. In this case, the screen direction of the multi-window management interface should rotate synchronously along with the multi-window player, and complete the function of switching between a horizontal screen and a vertical screen multi-window playing.

The interaction between the multi-window player management fragment and the multi-window player in this embodiment includes one or more of the following modes: multi-window video program addition, multi-window video program deletion, multi-window playing environment detection, multi-window video program display, multi-window video display synchronization, and multi-window playing state switching.

In this embodiment, the interaction between the multi-channel video management fragment and the video program interface is based on the technical event EventBus to realize the interaction between the program interface and the multi-window player management fragment. The interaction mainly includes functions such as opening or closing of the multi-video playing mode, the multi-window video program addition or deletion, a name and display of the corresponding content of the multi-video playing program, synchronization of corresponding information of the program interface when an abnormal situation occurs in the process of multi-video playing. The interaction between the user and the multi-video provides the user with a convenient, fast and smooth multi-channel video operation interaction mode.

FIG. 5 is a diagram of an interaction between a multi-window player management fragment and a multi-window player provided by an embodiment. As shown in FIG. 5, the interaction modes include: the multi-window video program addition, the multi-window video program deletion, the multi-window playing environment detection, the multi-window video program display, the multi-window video program display synchronization, and the multi-window playing state switching.

The multi-window video program addition: the multi-window video program addition is divided into two kinds of processes. In one process, it needs to create the multi-window player management fragment first when it is determined that the multi-window playing is started the first time. In the process of creating and starting, a first multi-window player is automatically started and loaded and the multi-window video program addition is implemented. In the other process, when it is determined that the multi-window playing is not started the first time (i.e., the multi-window player management fragment has been started), the started multi-window player management fragment is acquired, a new multi-window player is created and added to the multi-window player management fragment, and the multi-window playing video addition is completed.

Multi-window video program display and synchronization: after the multi-window player starts playing, the program interface needs to display all the video programs being played, i.e., after the multi-window player is successfully created, the video programs are added to create a video program display window. The video program display window is maintained to be synchronized with the multi-window player, i.e., when the multi-window player exits abnormally, the content of the video program display window about the multi-window player will disappear.

Multi-window playing environment detection: during the multi-window playing process, when the video program is added, the current playing environment will be detected. When the number of multiple windows reaches the maximum number and the added video program is already playing, this video program is not allowed to be added.

The multi-window video program deletion: after the multi-window playing starts, the program interface displays all the contents played by the multi-window player being played. The user may select to delete any program on the interface, after deleting the program, the multi-window playing management interface receives the event, this multi-window player is released, the multi-window player arrangement mode is synchronously refreshed, and the video program deletion is completed.

Multi-window playing state switching: the multi-window playing state switching is used for turning on and off the multi-window playing. When the multi-window playing function is started, the program display interface needs to start the multi-window program display function. When the multi-window playing function is turned off, the program display interface needs to turn off the multi-window program display function.

The present disclosure enables the user to simultaneously watch multiple videos on an Android mobile terminal, so that the user does not miss the highlight of each video, and can freely switch the video viewing mode (switching between multi-video simultaneous viewing and one-video full-screen viewing), configure sound switching of the multiple videos and freely enjoy video surfing. The present disclosure implements multi-window (multi-video) playing on the Android mobile terminal, and has characteristics of user-friendliness, high sensitivity, ingenious design and small calculation amount, simple multi-channel video management, and various viewing modes switching and rich broadcasting operation).

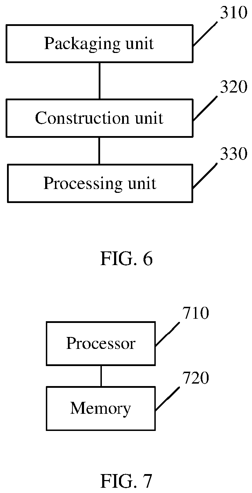

The embodiment of the present disclosure provides a device for playing multiple videos on a mobile terminal. Referring to FIG. 6, the device includes: a packaging unit 310, which is configured to package a playing SDK for docking a multi-window player; a construction unit 320, which is configured to construct the multi-window player based on an Android fragment, and dock the multi-window player with the packaged playing SDK so as to play multi-window video programs on a screen of a mobile terminal through the multi-window player; and a processing unit 330, which is configured to construct a multi-window player management fragment based on the Android fragment, establish an interaction between the multi-window player management fragment and the multi-window player based on a technical event, and manage playing of the multi-window player through the multi-window player management fragment.

The present disclosure packages the SDK through the packaging unit, docks the multi-window player and the packaged playing SDK through the construction unit and manages playing of the multi-window player through the multi-window player management fragment, finally establishes docking between the multi-window player management fragment and the program interface based on the technical event, thus implementing the playing of the multiple videos on the mobile terminal, the user is able to viewing the multiple videos at any time and place through the mobile terminal, thereby greatly enriching the user experience.

In an embodiment, the packaging unit 310 is configured to load a player library, create a player, initialize the player, set a playing interface, visit a playing address, start playing, report a playing event and handle the playing event.

This embodiment packages the playing SDK through the packaging unit 310 and establishes a connection with multiple players, so that the mobile terminal is able to play videos in multiple formats, and the packaged SDK in this embodiment is used for meeting needs of multi-window playing of the user. In addition, the present disclosure describes the method of the present disclosure only by taking an Android system as an example, and those skilled in the art may also implement the method provided by the present disclosure on other mobile terminal systems according to the method provided by the present disclosure.

The present disclosure eliminates difference between various mainstream players through docking the players with the playing SDK and packaging of the playing SDK, solves some problems of different players on different devices, and satisfies adaptation to different devices of the multi-window playing. A playing function interface is packaged, functions such as player creation, player initialization, visiting a playing address, starting playing and playing event reporting are provided. In the packaging of the playing SDK, how to solve the problems in the one video playing and the problems in the multi-window playing are fully considered and a reasonable work division is achieved.

In an embodiment, the construction unit 320 is configured to construct the multi-window player based on the Android fragment and dock the multi-window player with the packaged playing SDK in the following manner: constructing an interface layer, a control layer and a base dock layer of the based on the Android fragment; docking the playing SDK through the base dock layer, calling the playing SDK to complete loading of the player, performing multi-window mute and performing monitoring and capturing on the playing event; control multi-window playing through the control layer, binding a multi-window control through the interface layer, and performing gravity sensing on multi-window screen rotation and detection on a multi-window screen slide gesture. The present disclosure enables the mobile terminal to play smoothly and be operated sensitively when multiple windows are played simultaneously through rationally layering and rationally allocating functions of each layer.

The construction unit 320 is further configured to acquire a size of a playing interface of the multi-window player, multi-window player selecting and refreshing, multi-window player management data structure setting, multi-window player position arrangement refreshing, multi-window player sound setting, information synchronization and communication between multi-window players, switching between a full-screen window and smaller windows of the multi-window player, and screen direction changing of the multi-window player management interface. Multiple multi-window players are provided.

The construction unit 320 of this embodiment is configured to manage the playing of multi-window players, so that the multi-window players can work at the same time, and the selected window has sound, and a viewing mode in which a one-video-full-screen playing and a multiple-videos-simultaneous-playing can be switched is provided and a communication function of multi-window players is completed.

The present disclosure docks the multi-window player with the multi-window player management fragment, i.e., the multi-window player management fragment is not only a multi-window player manager, but also is a multi-window player container, carrying the multi-window player. The operation and communication between the multi-window player management fragment and the multi-window player are implemented, including loading and releasing of the multi-window player, the multi-window player interface refreshing, the screen direction changing and the like.

The related content in this embodiment may be understood with reference to the method embodiment, what has been described will not be repeated herein.

As shown in FIG. 7, an embodiment of the present disclosure provides a mobile terminal, which includes: a processor 710, a memory 720 and a communication bus. The communication bus is configured to implement communication between the processor 710 and the memory 720; the memory 720 is configured to store computer instructions and the processor 710 is configured to execute computer instructions stored in the memory 720 to implement the following steps: packaging a playing software development kit (SDK) for docking a multi-window player; constructing the multi-window player based on an Android fragment, and docking the multi-window player with the packaged playing SDK so as to play multi-window video programs on a screen of a mobile terminal through the multi-window player; and constructing a multi-window player management fragment based on the Android fragment, establishing an interaction between the multi-window player management fragment and the multi-window player based on a technical event EventBus, and managing playing of the multi-window player through the multi-window player management fragment.

According to the present disclosure, a multi-window player is docked with a packaged playing SDK and playing of the multi-window player is managed through a multi-window player management fragment, such that multiple videos are played on the mobile terminal and the user can view the multiple videos at any time and place through the mobile terminal, thereby greatly enriching the user experience.

An embodiment of the present disclosure further provides a computer-readable storage medium for storing one or more program codes which, when executed by one or more processors, implement any method for playing multiple videos on the mobile terminal provided by the present disclosure. Therefore, corresponding technical effects are also be implemented, which has been explained above, and will not be described herein.

## Claims

1. A method for playing multiple videos on a mobile terminal, comprising:
packaging (1010) a playing software development kit, SDK, for docking a multi-window player;
constructing (1020) the multi-window player based on an Android fragment, and docking the multi-window player with the packaged playing SDK so as to play multi-window video programs on a screen of a mobile terminal through the multi-window player; and
constructing (1030) a multi-window player management fragment based on the Android fragment, establishing an interaction between the multi-window player management fragment and the multi-window player based on a technical event EventBus, managing playing of the multi-window player through the multi-window player management fragment;
wherein the multi-window player comprises a base dock layer, a control layer and an interface layer;
wherein constructing (1020) the multi-window player based on an Android fragment, and docking the multi-window player with the packaged playing SDK comprises: constructing the base dock layer, the control layer and the interface layer of the multi-window player based on the Android fragment; docking the playing SDK through the base dock layer, calling the playing SDK to complete loading of the player, performing multi-window mute and performing monitoring and capturing on the playing event; controlling multi-window playing through the control layer, binding a multi-window control through the interface layer, and performing gravity sensing on multi-window screen rotation and detection on a multi-window screen slide gesture;
wherein a function of the multi-window player management fragment comprises multi-window player position arrangement refreshing, and the multi-window player position arrangement refreshing comprises:
forming multi-window player containers into a container link list; when adding or deleting the multi-window player, comparing a Java component list of the multi-window player with the container link list; through comparing container address, selecting an unused container from the container link list for carrying the multi-window player; and performing position refreshing according to a number of existing multi-window players and configuring a container size and a corresponding position of the selected container.

2. The method of claim 1, wherein packaging the playing software development kit (SDK) comprises:
loading a player library, creating a player, initializing the player, setting a playing interface, opening a playing address, starting playing, reporting a playing event and processing the playing event.

3. The method of claim 1, wherein controlling the multi-window playing comprises: multi-window click event capturing, converting a multi-window monitoring event to a multi-window message, multi-window playing event reporting, and switching between a full-screen window and smaller windows during the multi-window playing.

4. The method of any one of claims 1 to 2, wherein managing the playing of the multi-window player through the multi-window player management fragment comprises:
implementing the following operations through the multi-window player management fragment: acquiring a size of a playing interface of the multi-window player, multi-window player selecting and refreshing, setting of a management data structure of the multi-window player, multi-window player position arrangement refreshing, sound setting of the multi-window player, information synchronization and communication between multi-window players, multi-screen and full-screen switching of the multi-window player, and screen direction changing of a multi-window player management interface, wherein multiple multi-window players are provided.

5. The method of any one of claims 1 to 2, wherein
the interaction between the multi-window player management fragment and the multi-window player comprises at least one of: multi-window video program addition or deletion, multi-window playing environment detection, multi-window video program displaying and synchronization, and multi-window playing state switching.

6. A device for playing multiple videos on a mobile terminal, comprising
a packaging unit (310), which is configured to package a playing software development kit (SDK) for docking a multi-window player;
a construction unit (320), which is configured to construct the multi-window player based on an Android fragment, and dock the multi-window player with the packaged playing SDK so as to play multi-window video programs on a screen of a mobile terminal through the multi-window player; and
a processing unit (330), which is configured to construct a multi-window player management fragment based on the Android fragment, establish an interaction between the multi-window player management fragment and the multi-window player based on a technical event EventBus, and manage playing of the multi-window player through the multi-window player management fragment;
wherein the multi-window player comprises a base dock layer, a control layer and an interface layer;
the construction unit (320) is configured to construct the multi-window player based on the Android fragment, and dock the multi-window player with the packaged playing SDK in the following manner: constructing the base dock layer, the control layer and the interface layer of the multi-window player based on the Android fragment; docking the playing SDK through the base dock layer, calling the playing SDK to complete loading of the player, performing multi-window mute and performing monitoring and capturing on a playing event; controlling multi-window playing through the control layer, binding a multi-window control through the interface layer, and performing gravity sensing on multi-window screen rotation and detection on a multi-window screen slide gesture;
wherein a function of the multi-window player management fragment comprises multi-window player position arrangement refreshing, and the multi-window player position arrangement refreshing comprises:
forming multi-window player containers into a container link list; when adding or deleting the multi-window player, comparing a Java component list of the multi-window player with the container link list; through comparing container address, selecting an unused container from the container link list for carrying the multi-window player; and performing position refreshing according to a number of existing multi-window players and configuring a container size and a corresponding position of the selected container.

7. A mobile terminal, comprising: a processor (710), a memory (720) and a communication bus, wherein
the communication bus is configured to implement communication between the processor and the memory;
the processor is configured to execute computer instructions stored in the memory to implement the method for playing multiple videos on the mobile terminal of any one of claims 1 to 5.

8. A computer-readable storage medium storing one or more program codes which, when executed by one or more processors, implement the method for playing multiple videos on the mobile terminal of any one of claims 1 to 5.

## Patentansprüche

1. Verfahren zum Abspielen mehrerer Videos auf einem mobilen Endgerät, umfassend:
verpacken (1010) eines Software-Entwicklungskits, SDK, zum Andocken eines Mehrfensterabspielgeräts;
aufbauen (1020) des Mehrfensterabspielgeräts basierend auf einem Android-Fragment und Andocken des Mehrfensterabspielgeräts mit dem verpackten Abspiel-SDK, um Mehrfenster-Videoprogramme auf einem Bildschirm eines mobilen Endgeräts durch das Mehrfensterabspielgerät abzuspielen; und
aufbauen (1030) eines Mehrfensterabspielgerät-Verwaltungsfragments basierend auf dem Android-Fragment, Herstellen einer Interaktion zwischen dem Mehrfensterabspielgerät-Verwaltungsfragment und dem Mehrfenster basierend auf einem technischen Ereignis EventBus, Verwalten eines Abspielens des Mehrfensters durch das Mehrfensterabspielgerät-Verwaltungsfragment;
wobei das Mehrfensterabspielgerät eine Basis-Dockingschicht, eine Steuerschicht und eine Schnittstellenschicht umfasst;
wobei ein Aufbauen (1020) des Mehrfensterabspielgeräts basierend auf einem Android-Fragments und ein Andocken des Mehrfensterabspielgeräts mit dem verpackten Abspiel-SDK Folgendes umfasst: Aufbauen der Basis-Andockschicht, der Steuerschicht und der Schnittstellenschicht des Mehrfensterabspielgeräts basierend auf dem Android-Fragment; Andocken des Abspiel-SDK durch die Basis-Andockschicht, Aufrufen des Abspiel-SDK, um ein Laden des Abspielgeräts abzuschließen, Durchführen einer Mehrfensterstummschaltung und Durchführen eines Überwachens und Erfassens des Abspielereignisses;
Steuern eines Mehrfensterabspielens durch die Steuerschicht, Binden einer Mehrfenstersteuerung durch die Schnittstellenschicht und Durchführen einer Schwerkraftabtastung bei einer Mehrfensterbildschirmdrehung und Erfassen einer Mehrfensterbildschirm-Schiebgeste;
wobei eine Funktion des Mehrfensterabspielgerät-Verwaltungsfragments ein Auffrischen der Mehrfensterabspielgerät-Positionsanordnung umfasst, und ein Auffrischen der Mehrfensterabspielgerät-Positionsanordnung Folgendes umfasst:
bilden von Mehrfensterabspielgerät-Containern in einer Container-Verknüpfungsliste; beim Hinzufügen oder Löschen des Mehrfensterabspielgeräts, Vergleichen einer Java-Komponentenliste des Mehrfensterabspielgeräts mit der Container-Verknüpfungsliste; durch Vergleichen der Container-Adresse, Auswählen eines unbenutzten Containers aus der Container-Verknüpfungsliste zum Tragen des Mehrfensterabspielgeräts; und Durchführen einer Positionsauffrischung gemäß einer Anzahl von existierenden Mehrfensterabspielgeräten und Konfigurieren einer Containergröße und einer entsprechenden Position des ausgewählten Containers.

2. Verfahren nach Anspruch 1, wobei ein Verpacken des abspielenden Software-Entwicklungskits (SDK) Folgendes umfasst:
laden einer Abspielgerät-Bibliothek, Erstellen eines Abspielgeräts, Initialisieren des Abspielgeräts, Einstellen einer Abspielschnittstelle, Öffnen einer Abspieladresse, Starten eines Abspielens, Melden eines Abspielereignisses und Verarbeiten des Abspielereignisses.

3. Verfahren nach Anspruch 1, wobei ein Steuern des Mehrfensterabspielens Folgendes umfasst:
Erfassen von Mehrfenster-Klickereignissen, Umwandeln eines Mehrfenster-Überwachungsereignisses in eine Mehrfensternachricht, Berichten von Mehrfensterabspielereignissen und Umschalten zwischen einem Vollbildfenster und kleineren Fenstern während des Mehrfensterabspielens.

4. Verfahren nach einem der Ansprüche 1 bis 2, wobei ein Verwalten des Abspielens des Mehrfensterabspielgeräts durch das Mehrfensterabspielgerät-Verwaltungsfragment Folgendes umfasst: implementieren der folgenden Vorgänge durch das Mehrfensterabspielgerät-Verwaltungsfragment: Erfassen einer Größe einer Abspielschnittstelle des Mehrfensterabspielgeräts, Auswählen und Auffrischen des Mehrfensterabspielgeräts, Einstellen einer Verwaltungsdatenstruktur des Mehrfensterabspielgeräts, Auffrischen der Mehrfensterabspielgerät-Positionsanordnung, Klangeinstellung des Mehrfensterabspielgeräts, Informationssynchronisation und Kommunikation zwischen Mehrfensterabspielgeräten, Umschalten des Mehrfensterabspielgeräts auf mehrere Bildschirme und auf den vollen Bildschirm und Ändern der Bildschirmrichtung einer Mehrfensterabspielgerät-Verwaltungsschnittstelle, wobei mehrere Mehrfensterabspielgerät bereitgestellt sind.

5. Verfahren nach einem der Ansprüche 1 bis 2, wobei die Interaktion zwischen dem Mehrfensterabspielgerät-Verwaltungsfragment und dem Mehrfensterabspielgerät mindestens eines von Folgenden umfasst: Hinzufügen oder Löschen von Mehrfenster-Videoprogrammen, Erkennen der Mehrfensterabspielumgebung, Anzeigen und Synchronisieren von Mehrfenster-Videoprogrammen und Umschalten eines Mehrfensterabspielzustands.

6. Vorrichtung zum Abspielen mehrerer Videos auf einem mobilen Endgerät, umfassend
eine Verpackungseinheit (310), die konfiguriert ist, um ein Abspielsoftware-Entwicklungskit (SDK) zum Andocken eines Mehrfensterabspielgeräts zu verpacken;
eine Konstruktionseinheit (320), die konfiguriert ist, um das Mehrfensterabspielgerät basierend auf eines Android-Fragments aufzubauen und das Mehrfensterabspielgerät an dem verpackten Abspiel-SDK anzudocken, um Mehrfenster-Videoprogramme auf einem Bildschirm eines mobilen Endgeräts durch das Mehrfensterabspielgerät abzuspielen; und
eine Verarbeitungseinheit (330), die konfiguriert ist, um ein Mehrfensterabspielgerät-Verwaltungsfragment basierend auf dem Android-Fragment aufzubauen, eine Interaktion zwischen dem Mehrfensterabspielgerät-Verwaltungsfragment und dem Mehrfensterabspielgerät basierend auf eines technischen Ereignisses EventBus herzustellen und ein Abspielen des Mehrfensterabspielgeräts durch das Mehrfensterabspielgerät-Verwaltungsfragment zu verwalten; wobei das Mehrfensterabspielgerät eine Basis-Dockingschicht, eine Steuerschicht und eine Schnittstellenschicht umfasst;
die Aufbaueinheit (320) konfiguriert ist, um das Mehrfensterabspielgerät basierend auf dem Android-Fragment aufzubauen und das Mehrfensterabspielgerät an dem verpackten Abspiel-SDK auf folgende Weise anzudocken: Aufbauen der Basis-Andockschicht, der Steuerschicht und der Schnittstellenschicht des Mehrfensterabspielgeräts basierend auf dem Android-Fragment; Andocken des Abspiel-SDK durch die Basis-Andockschicht, Aufrufen des Abspiel-SDK, um ein Laden des Abspielgeräts abzuschließen, Durchführen einer Mehrfensterstummschaltung und Durchführen eines Überwachens und Erfassens eines Abspielereignisses;
Steuern eines Mehrfensterabspielens durch die Steuerschicht, Binden einer Mehrfenstersteuerung durch die Schnittstellenschicht und Durchführen einer Schwerkraftabtastung bei einer Mehrfensterbildschirmdrehung und Erfassen einer Mehrfensterbildschirm-Schiebgeste;
wobei eine Funktion des Mehrfensterabspielgerät-Verwaltungsfragments ein Auffrischen der Mehrfensterabspielgerät-Positionsanordnung umfasst, und ein Auffrischen der Mehrfensterabspielgerät-Positionsanordnung Folgendes umfasst:
bilden von Mehrfensterabspielgerät-Containern in einer Container-Verknüpfungsliste; beim Hinzufügen oder Löschen des Mehrfensterabspielgeräts, Vergleichen einer Java-Komponentenliste des Mehrfensterabspielgeräts mit der Container-Verknüpfungsliste; durch Vergleichen der Container-Adresse, Auswählen eines unbenutzten Containers aus der Container-Verknüpfungsliste zum Tragen des Mehrfensterabspielgeräts; und Durchführen einer Positionsauffrischung gemäß einer Anzahl von existierenden Mehrfensterabspielgeräten und Konfigurieren einer Containergröße und einer entsprechenden Position des ausgewählten Containers.

7. Mobiles Endgerät, umfassend: einen Prozessor (710), einen Speicher (720) und einen Kommunikationsbus, wobei der Kommunikationsbus konfiguriert ist, um die Kommunikation zwischen dem Prozessor und dem Speicher zu implementieren;
der Prozessor konfiguriert ist, um in dem Speicher gespeicherte Computeranweisungen auszuführen, um das Verfahren zum Abspielen mehrerer Videos auf dem mobilen Endgerät nach einem der Ansprüche 1 bis 5 zu implementieren.

8. Computerlesbares Speichermedium, das einen oder mehrere Programmcodes speichert, die, wenn sie von einem oder mehreren Prozessoren ausgeführt werden, das Verfahren zum Abspielen mehrerer Videos auf dem mobilen Endgerät nach einem der Ansprüche 1 bis 5 implementieren.

## Revendications

1. Méthode de lecture de vidéos multiples sur un terminal mobile, comprenant:
l'emballage (1010) d'un kit de développement logiciel, SDK, pour l'ancrage d'un lecteur multi-fenêtre; construire (1020) le lecteur multi-fenêtres sur la base d'un fragment Android, et connecter le lecteur multi-fenêtres avec le SDK de lecture packagé de manière à lire des programmes vidéo multi-fenêtres sur l'écran d'un terminal mobile par l'intermédiaire du lecteur multi-fenêtres; et
construire (1030) un fragment de gestion de lecteur multi-fenêtre sur la base du fragment Android, établir une interaction entre le fragment de gestion de lecteur multi-fenêtre et le lecteur multi-fenêtre sur la base d'un événement technique EventBus, gérer la lecture du lecteur multi-fenêtre par l'intermédiaire du fragment de gestion de lecteur multi-fenêtre;
où le lecteur multi-fenêtre comprend une couche d'ancrage de base, une couche de contrôle et une couche d'interface;
où la construction (1020) du lecteur multi-fenêtre sur la base d'un fragment Android et l'intégration du lecteur multi-fenêtre avec le SDK de lecture packagé comprennent: la construction de la couche d'ancrage de base, de la couche de contrôle et de la couche d'interface du lecteur multi-fenêtre sur la base du fragment Android; l'ancrage du SDK de lecture par l'intermédiaire de la couche d'ancrage de base, l'appel du SDK de lecture pour terminer le chargement du lecteur, la mise en sourdine de plusieurs fenêtres et la surveillance et la capture de l'événement de lecture; le contrôle de la lecture de plusieurs fenêtres par l'intermédiaire de la couche de contrôle, la liaison d'une commande de plusieurs fenêtres par l'intermédiaire de la couche d'interface, et la détection de la gravité lors de la rotation de l'écran de plusieurs fenêtres et la détection d'un geste de glissement de l'écran de plusieurs fenêtres;
où une fonction du fragment de gestion du lecteur multi-fenêtre comprend le rafraîchissement de l'arrangement de la position du lecteur multi-fenêtre, et le rafraîchissement de l'arrangement de la position du lecteur multi-fenêtre comprend:
former des conteneurs de lecteurs multi-fenêtres dans une liste de liens de conteneurs; lors de l'ajout ou de la suppression du lecteur multi-fenêtre, comparer une liste de composants Java du lecteur multi-fenêtre avec la liste de liens de conteneurs; en comparant l'adresse du conteneur, sélectionner un conteneur inutilisé dans la liste de liens de conteneurs pour transporter le lecteur multi-fenêtre; et rafraîchir la position en fonction du nombre de lecteurs multi-fenêtres existants et configurer une taille de conteneur et une position correspondante pour le conteneur sélectionné.

2. Méthode selon la revendication 1, dans laquelle l'emballage du kit de développement logiciel (SDK) de lecture comprend:
charger une bibliothèque de lecteurs, créer un lecteur, initialiser le lecteur, définir une interface de jeu, ouvrir une adresse de jeu, commencer à jouer, signaler un événement de jeu et traiter l'événement de jeu.

3. Méthode selon la revendication 1, dans laquelle le contrôle de la lecture multi-fenêtre comprend:
la capture d'un événement de clic multi-fenêtre, la conversion d'un événement de surveillance multi-fenêtre en un message multi-fenêtre, le rapport d'un événement de lecture multi-fenêtre, et la commutation entre une fenêtre plein écran et des fenêtres plus petites pendant la lecture multi-fenêtre.

4. Méthode selon l'une des revendications 1 à 2, dans laquelle la gestion de la lecture du lecteur multi-fenêtre par le fragment de gestion du lecteur multi-fenêtre comprend:
mettre en œuvre les opérations suivantes par l'intermédiaire du fragment de gestion du lecteur multi-fenêtre : acquisition d'une taille d'interface de lecture du lecteur multi-fenêtre, sélection et rafraîchissement du lecteur multi-fenêtre, réglage d'une structure de données de gestion du lecteur multi-fenêtre, rafraîchissement de l'arrangement de position du lecteur multi-fenêtre, réglage du son du lecteur multi-fenêtre, synchronisation des informations et communication entre les lecteurs multi-fenêtres, commutation multi-écran et plein écran du lecteur multi-fenêtre et changement de direction de l'écran d'une interface de gestion du lecteur multi-fenêtre, dans le cas où plusieurs lecteurs multif-enêtres sont fournis.

5. Méthode selon l'une des revendications 1 à 2, où l'interaction entre le fragment de gestion du lecteur multi-fenêtre et le lecteur multi-fenêtre comprend au moins un des éléments suivants: ajout ou suppression d'un programme vidéo multi-fenêtre, détection d'un environnement de lecture multi-fenêtre, affichage et synchronisation d'un programme vidéo multi-fenêtre, et commutation d'un état de lecture multi-fenêtre.

6. Dispositif de lecture de vidéos multiples sur un terminal mobile, comprenant
une unité d'emballage (310), configurée pour emballer un kit de développement de logiciel de lecture (SDK) pour l'ancrage d'un lecteur multi-fenêtre;
une unité de construction (320), configurée pour construire le lecteur multi-fenêtres sur la base d'un fragment Android et pour intégrer le lecteur multi-fenêtres avec le SDK de lecture packagé de manière à lire des programmes vidéo multi-fenêtres sur l'écran d'un terminal mobile par l'intermédiaire du lecteur multi-fenêtres; et
une unité de traitement (330), configurée pour construire un fragment de gestion de lecteur multi-fenêtre sur la base du fragment Android, établir une interaction entre le fragment de gestion de lecteur multi-fenêtre et le lecteur multi-fenêtre sur la base d'un événement technique EventBus, et gérer la lecture du lecteur multi-fenêtre par l'intermédiaire du fragment de gestion de lecteur multi-fenêtre;
dans lequel le lecteur multi-fenêtre comprend une couche d'ancrage de base, une couche de contrôle et une couche d'interface;
l'unité de construction (320) est configurée pour construire le lecteur multi-fenêtres sur la base du fragment Android, et ancrer le lecteur multi-fenêtres avec le SDK de lecture packagé de la manière suivante: construire la couche d'ancrage de base, la couche de contrôle et la couche d'interface du lecteur multi-fenêtre sur la base du fragment Android; ancrer le SDK de lecture à travers la couche d'ancrage de base, appeler le SDK de lecture pour terminer le chargement du lecteur, mettre en sourdine plusieurs fenêtres et effectuer la surveillance et la capture d'un événement de lecture; contrôler la lecture multi-fenêtre à travers la couche de contrôle, lier une commande multi-fenêtre à travers la couche d'interface, et effectuer la détection de la gravité sur la rotation de l'écran multi-fenêtre et la détection d'un geste de glissement de l'écran multi-fenêtre;
où une fonction du fragment de gestion du lecteur multi-fenêtre comprend le rafraîchissement de l'arrangement de la position du lecteur multi-fenêtre, et le rafraîchissement de l'arrangement de la position du lecteur multi-fenêtre comprend:
former des conteneurs de lecteurs multi-fenêtres dans une liste de liens de conteneurs; lors de l'ajout ou de la suppression du lecteur multi-fenêtre, comparer une liste de composants Java du lecteur multi-fenêtre avec la liste de liens de conteneurs; en comparant l'adresse du conteneur, sélectionner un conteneur inutilisé dans la liste de liens de conteneurs pour transporter le lecteur multi-fenêtre; et rafraîchir la position en fonction du nombre de lecteurs multi-fenêtres existants et configurer une taille de conteneur et une position correspondante pour le conteneur sélectionné.

7. Terminal mobile comprenant: un processeur (710), une mémoire (720) et un bus de communication, dans lequel le bus de communication est configuré pour mettre en œuvre la communication entre le processeur et la mémoire ;
le processeur est configuré pour exécuter des instructions informatiques stockées dans la mémoire afin de mettre en œuvre la méthode de lecture de vidéos multiples sur le terminal mobile de l'une des revendications 1 à 5.

8. Support de stockage lisible par ordinateur stockant un ou plusieurs codes de programme qui, lorsqu'ils sont exécutés par un ou plusieurs processeurs, mettent en œuvre la méthode de lecture de vidéos multiples sur le terminal mobile de l'une des revendications 1 à 5.
